# EUROPEAN PATENT APPLICATION

(11) **EP 4 825 832 A1**
(43) Date of publication of application: **21.10.2026**
(21) Application number: 25171511.6
(22) Date of filing: 18.04.2025
(51) Int. Cl.: C05D 1/00, C05F 5/00, C05F 11/02

(54) **A PROCESS FOR THE EFFICIENT PRODUCTION OF ARTIFICIAL HUMIC SUBSTANCES FROM BIOMASS**

(71) Applicant: Humify GmbH, 14513 Teltow (DE)
(72) Inventor: Filonenko, Svitlana, 14558 Nuthetal (DE); Doskaliuk, Nataliia, 14480 Potsdam (DE); Tutsch, Marco, 12247 Berlin (DE); Hagemann, Philipp, 19053 Schwerin (DE)
(74) Representative: Deblon, Jörg-Stephan

(57) **Abstract**

The present invention relates to an efficient continuous process for the preparation of artificial humic substances, the artificial humic substances as such as well as the use of the inventive artificial humic substances for various applications such as the improvement of soil quality.

## Description

### Field of the invention

The present invention relates to an efficient continuous process for the preparation of artificial humic substances, the artificial humic substances as such as well as the use of the inventive artificial humic substances for various applications such as the improvement of soil quality.

### Background of the invention

Humic substances denote a group of complex organic compounds found in soil, peat, coal, and many natural waters. They are typically formed through the decomposition of plant and animal matter and play a crucial role in soil fertility and plant growth. Humic substances are usually divided into three main categories, which are
(i) humic acids, i.e. large and complex molecules, soluble in alkaline solutions but not in water and comprising carboxylic and phenolic groups contributing to the acidity and reactivity of humic acids.
(ii) fulvic acids, i.e. molecules that are smaller, more chemically reactive and exhibit a higher oxygen content than humic acids and which are soluble in both water and alkaline solutions, and
(iii) humins i.e. the insoluble fraction of humic substances which are resistant to further decomposition.

Humic substances improve soil structure, increase water retention, and enhance nutrient availability for plants. They also play a crucial role in carbon sequestration, helping to mitigate the consequences of climate change.

Humic substances are commercially produced through the extraction from naturally occurring deposits of humified organic matter, such as lignite, leonardite, an oxidized form of lignite or peat. Since this production process is based on isolation of natural humic substances, the products are frequently referred to as natural humic substances, natural humic and fulvic acids and humin in the prior art.

In contrast to natural occurring humic substances artificial humic substances are typically produced by human-assisted conversion of biomass e.g. by accelerated composting which may occur by active heating or addition of suitable microbes or in a more sophisticated way by hydrothermal conversion.

Due to the beneficial properties of humic substances in various applications numerous attempts have been undertaken to utilize biomass, in particular waste biomass for the production of humic substances and/or coal-like materials.

CN110540479B discloses a sludge recycling process using hydrothermal sludge treatment in the presence of base and subsequent heavy metals recovery with strong mineral acids. The process is performed in batch.

WO2021047111A1 relates to a method of increasing the availability of phosphorus to plants by hydrothermally treating a mixture of biomass and insoluble phosphate under basic conditions. The process is also performed batchwise and produces a compound phosphate fertilizer.

In WO 2010/092040A1, a hydrothermal process for the preparation of coal-like material from biomass using an evaporation column is disclosed. The process is performed continuously, preferably at a pH range from 3 to 7.

A high speed reactor system for converting an organic feedstock into an improved fuel product is disclosed in ES2833045T3. The related process operates without the addition of base at a temperature of 400 to 700 °C and a pressure of 10 MPa to 41.5 MPa.

WO 2008/138637A2 claims a method and device for hydrothermal carbonization (typically abbreviated as htc) of biomass to produce coal or humus in a continuous or discontinuous manner. The method describes a classical hydrothermal reaction without applying basic conditions.

A similar process is disclosed in WO 2009/127727 A1 wherein biomass is converted to coal-like material using hydrothermal carbonization. The process encompasses a disintegration step performed under the hydrothermal treatment and a subsequent condensation step performed in the presence of a polymerization initiator. Both steps are performed separately in a batch reactor, and the polymerization initiator are for example selected from oxygen, peroxides or azo compounds.

CN104736675A reports about a process of biomass liquefaction and a suitable device therefor, whereby the process is performed in the presence of organic solvent and water in amounts of 10 to 25 wt.% to ensure the balance between lignin and cellulose hydrolysis and ability of the reaction mixture to dissolve the final reaction products. The process is performed under high pressure and at elevated temperatures in absence of acid or base catalysts and results in a mixture of low molecular weight compounds such as phenols, esters and aldehydes which may be used as a liquid fuel.

Particulate carbon material from renewable raw materials are described in WO 2017/085278 A1. The four step procedure is operated continuously and encompasses a hydrothermal carbonization step in a temperature range of 150 to 250 °C. The resulting particulate carbons exhibit an oxygen content in a range between 20 and 30 wt.% which is well below the 40 wt.% typically observed for artificial humic substances.

Likewise US 2012/103040 A discloses a method for the hydrothermal carbonization of renewable raw materials and organic residues into humus or coal both having a low oxygen content.

Fan Yang et al., Science of the Total Environment, 686 (2019), pp.1140-1151 describe a hydrothermal process to turn different types of biomass into artificial humic substances. According to the authors, the transformation requires sufficient basic conditions that promote aldol splitting of sugars to organic acids and condensation takes place upon cooling a batch reactor.

In summary, though promising approaches have been pursued in the prior art, there was still a need for providing an efficient process for the efficient conversion of biomass to humic substances under mild to moderate conditions.

### Summary of the invention

There is now provided a process for the conversion of biomass into humic substances the process comprising at least the steps of
1) Providing a mixture of
   i) biomass and
   ii) base
2) heating said mixture at a temperature of 160 to 250°C, preferably 180 to 230 °C for 5 seconds to 300 minutes, preferably 10 seconds to 240 minutes and more preferably 20 seconds to 120 minutes to produce a reaction mixture
3) heating the resulting reaction mixture at a temperature of 80 to 159°C, preferably 100 to 140°C for at least 90 minutes, preferably 90 to 480 minutes, more preferably 120 to 240 minutes to obtain as product artificial humic substances.

Preferably at least one of steps 1), 2) and 3), preferably at least 2 of the steps, more preferably all three steps are performed continuously, preferably using a device designed to allow continuous operation.

The invention further encompasses the artificial humic substances obtainable by the inventive process and a method of use in various applications.

### Brief explanation of the figures

Fig 1. Shows the diagram of a basic device for performing the inventive process in a continuous manner which comprises a mixing unit, a heater and a processing unit comprising two separate reaction sections and an outlet section. Fig 2. shows a FTIR spectrum of the artificial humic substance obtained according to example 1.
Fig 3. shows a UV spectrum of the artificial humic substance obtained according to example 1.
Fig 4. shows a FTIR spectrum of the artificial humic substance obtained according to example 2.
Fig 5. shows a UV spectrum of the artificial humic substance obtained according to example 2.

### Detailed description

The invention also encompasses all combinations of preferred embodiments, ranges parameters as disclosed hereinafter with either each other or the broadest disclosed range or parameter.

Whenever used herein the terms "including", "for example", "e.g.", "such as" and "like" are meant in the sense of "including but without being limited to" or "for example without limitation", respectively.

As used herein "continuous" of "continuous operation" shall mean a process or process step which is designed to be performed or performed such that educts are entering and products are leaving the process or process step either simultaneously or time-shifted within an interval of less than 5 minutes, preferably less than 1 minute, so sufficiently short compared to the overall residence or reaction time of the process or process step, preferably simultaneously.

In step 1) according to the inventive process a mixture of biomass and base is provided.

As used herein, the term "biomass" encompasses all kinds of plant material and animal material and any material derived from plant material and animal material.

In a preferred embodiment, biomass as meant in the present specification shall not include petroleum or petroleum-based products.

In one embodiment biomass for use in the inventive process comprises macromolecular compounds, examples of which are lignin and polysaccharides also referred to as polyoses, such as starch, glucagon, glycogen, cellulose and hemicelluloses or cellulose or polysaccharides covalently bound to lignin as it is for example the case in wood and which materials are typically referred to as lignocelluloses.

It is known to those skilled in the art that certain kinds of biomass may include plant material and animal material or materials derived from plant material and animal material. Examples include manure (dung), night soil and sewage sludge.

While the biomass for use in the inventive process is preferably plant biomass, i.e. plant material or material derived from plants, certain contents of animal biomass i.e. animal material or material derived from animals may be present therein. For instance, the biomass employed in the inventive process may contain up to 30 wt.-% of animal biomass.

In another embodiment the biomass employed in the inventive process contains less than 10 wt.-%, preferably less than 5 wt.-% and more preferably less than 1 wt.-% of animal biomass.

According to a preferred embodiment, the biomass for use in the present invention, which is preferably plant biomass, contains 70 wt.% or more, more preferably 80 wt.% or more and most preferably 90% or more of polysaccharides and lignines and polysaccharides covalently bound to lignines with respect to the dry mass of the biomass employed.

As use term "dry mass" refers to the mass obtained by heating a weighed sample of the biomass to be employed (1 to 2 g) at 105°C until the weight loss is less than 0.1 % by weight of the original mass of the sample in 60 sec. The method is further outlined in the experimental part.

For instance, the plant biomass may be agricultural plant material such as those obtained as agricultural wastes or all kinds of wood or wooden material.

Without limitation, examples of biomass are crop, agricultural food and agricultural waste, feed crop residues, wood such as wood flour, wood waste, scrap wood, sawdust, chips and discards, straw including rice straw, grass, leaves, chaff and bagasse. Further examples are industrial and municipal wastes, including waste paper.

Further specific examples include plant processing residues oil press cakes left after extracting oil from seeds or nuts like sunflower seeds, soybeans and peanuts, further olive kernels including pits and pulp, fruit pomace such as apple grape and citrus pomace, coffee grounds, rice husk, corn stover, wheat bran, coconut husk, palm kernel shells, soybean hulls, shea peels, cassava peels, peanut shells and grape seeds and skins.

In one embodiment biomass also includes monosaccharides such as glucose, ribose, xylose, arabinose, mannose, galactose, fructose, sorbose, fucose and rhamnose, as well as oligosaccharides with 2 to 20 units of one or more of the aforementioned monosaccharides.

In step 1) biomass and base are mixed. Suitable bases include ammonia, in particular its aqueous solution, oxides of calcium and magnesium, hydroxides of calcium, magnesium, sodium and potassium, carbonates of calcium, magnesium, sodium and potassium and any mixtures of the aforementioned bases.

Preferred bases include oxides of calcium and magnesium, hydroxides of calcium, magnesium, sodium and potassium, carbonates of calcium, magnesium, sodium and potassium and any mixtures of the aforementioned bases.

In a more preferred embodiment potassium carbonate and/or potassium hydroxide are employed as a base, in an even more preferred embodiment potassium hydroxide.

The base can be employed as a solid or as an aqueous suspension or aqueous solution.

The weight ratio of biomass and base both calculated on dry mass is for example from 1:1 to 50:1, preferably from 3:1 to 20:1 and more preferably from 4:1 to 10:1.

In one embodiment the amount of base is selected in dependence of the type and composition of the biomass employed as well as the selected exact reaction conditions such that the final pH value normalized to or measured at 25°C is from 6 to 10, preferably from 7 to 9 and more preferably from 7.2 to 9.0 after step 3).

One skilled in the art is well aware how to determine the amount of base required using one or very few orienting trials.

In one embodiment the content of biomass calculated on its dry mass is for example from 5 wt.% to 80 wt.%, preferably from 20 wt.% to 60 wt.% and more preferably from 25 wt.% to 60 wt.%, for example 30 wt.% of the total weight of the mixture employed in step 1).

In order to adjust the content of biomass calculated on its dry mass to the desired level water might optionally be **added** in step 1) to form the mixture.

Mixing of the base and the biomass and optionally water can be performed by any means known to those skilled in the art for that purpose. Examples of suitable mixing devices are given below.

In step 2) the mixture obtained according to step 1) is heated at a temperature of 160 to 250°C, preferably 180 to 230 °C for 5 seconds to 300 minutes, preferably 10 seconds to 240 minutes and more preferably 20 seconds to 120 minutes to produce a reaction mixture.

As used herein heating at a certain temperature means the time the mixture of biomass and base itself has a temperature in the given range for the given time.

Where step 2) is carried out continuously, the reaction time in step 2) is preferably from 5 seconds to 30 minutes, more preferably from 10 seconds to 10 minutes and even more preferably from 20 seconds to 5 minutes, in particular where the first reaction section comprises or is a multishaft extruder or multishaft kneader as further defined below.

Where step 2) is performed batchwise the reaction time in step 2) is preferably from 30 minutes to 300 minutes, preferably from 60 minutes to 240 minutes and even more preferably from 90 minutes to 120 minutes.

Thereafter, in step 3) the resulting reaction mixture is heated at a temperature range of 80 to 159°C, preferably 100 to 140°C for 90 to 480 minutes, preferably 120 to 240 minutes irrespective of whether step 3) is performed batchwise or continuously.

In one embodiment the reaction temperature in step 3) is selected such that it is at least 20 K, preferably at least 30 K and more preferably at least 50 K lower than in step 2), preferably from 20 to 170 K, preferably 30 to 130 K and more preferably 50 to 100 K.

It is apparent to those skilled in the art that the temperature drop between step 2) and step 3) as described above depending on the desired temperature difference requires a certain time.

Therefore, in one embodiment the temperature drop between step 2) and step 3) is effected within a timeframe of 1 seconds to 30 minutes, preferably 5 seconds to 10 minutes and more preferably 15 seconds to 5 minutes.

The same applies to preferred embodiments of the temperatures for step 2) of 180 to 230°C and step 3) of 100 to 140°C wherein a temperature difference of 40K to 130K may exists.

Analogously, and as used herein heating at a certain temperature means the time the reaction mixture itself has a temperature in the given range for the given time.

Without wanting to be bound by theory it is believed that the inventive conversion of biomass under the selected conditions includes several general types of reaction.

These are
- in step 2)alkaline hydrolysis of macromolecules such as polyoses and proteins thereby at least substantially preventing dehydration and carbonization as well as support of retro-aldol splitting of polyoses
- in step 3) subsequent condensation to complex high molecular weight compounds or around the aromatic core of lignin components to the extent they were employed in the process as component of the biomass. The term condensation includes for example condensation of polyoses or the Maillard reaction.

In this step 3) also aromatic compounds may be formed by cyclization reactions.

Hydrolysis can be catalyzed by catalytic amounts of acid or base. Retro-aldol splitting of polyoses require the presence of base that also enables lignin dissolution where present in the mixture employed and is further consumed in retro-aldol-splitting of the polyoses, after which lignin to the extent employed in the reaction or aromatic compounds formed by cyclization reactions in step 3) gradually precipitate forming seeds for the condensation described above and finally leading to artificial humic substances.

Preferably at least one of steps 1), 2) and 3), preferably at least two of the steps are performed continuously in a suitable device, preferably a device designed to allow continuous operation.

Since hydrolysis can also be catalyzed by catalytic amounts of acid the process according to the invention may further comprise a step pre-1) or not.

In one embodiment the process includes such step pre-1) the wherein the biomass is treated with acids or enzymes in order to at least partially hydrolyse macromolecules such as polyoses or polyoses covalently bound to lignin such as lignocelluloses or proteins.

Suitable acids include mineral acids such as sulphuric acid, such as sulfuric acid with a content of 50 to 70 wt.% and hydrochloric acid such as 6M HCl.

Further suitable acids include organic acids such as acetic, formic, citric or lactic acid.

The temperatures and reaction times for step pre-1) are for example the same as for step 1) if acids are employed.

Suitable enzymes include for example all hydrolases known to those skilled in the art for that purpose.

The temperature for step pre-1) may be for example from 10° to 40°C, preferably from 15 to 30°C, the reaction time may range from 60 minutes to 48 hours if enzymes are employed.

Its apparent to those skilled in the art that where acids are employed in a step pre-a) the amount of base employed in step 1) might have to be increased to account for the amount of acids.

In one embodiment the inventive process is performed such that the artificial humic substances are prepared in a continuous process comprising at least the steps of:
1) feeding biomass and base and optionally additional water into at least one mixing unit (1) to obtain a mixture of biomass and base having a water content as defined above for step 1),
2) heating the mixture provided in step 1) in a first reaction section (6) of a processing unit (4) at the temperature as defined above to obtain a reaction mixture
3) heating the reaction mixture of step 2) in a second reaction section (10) of a processing unit (4) to the temperature and the period as defined for step 3) above thereby obtaining the artificial humic substances at the outlet section (11) of the processing unit (4).

In this embodiment the reaction time in step 2) is preferably from 5 seconds to 30 minutes, more preferably from 10 seconds to 10 minutes and even more preferably from 20 seconds to 5 minutes, in particular where the first reaction section comprises or is a multishaft extruder or multishaft kneader as further defined below.

Where step 2) is performed batchwise the reaction time in step 2) is preferably from 30 minutes to 300 minutes, preferably from 60 minutes to 240 minutes and even more preferably from 90 minutes to 120 minutes.

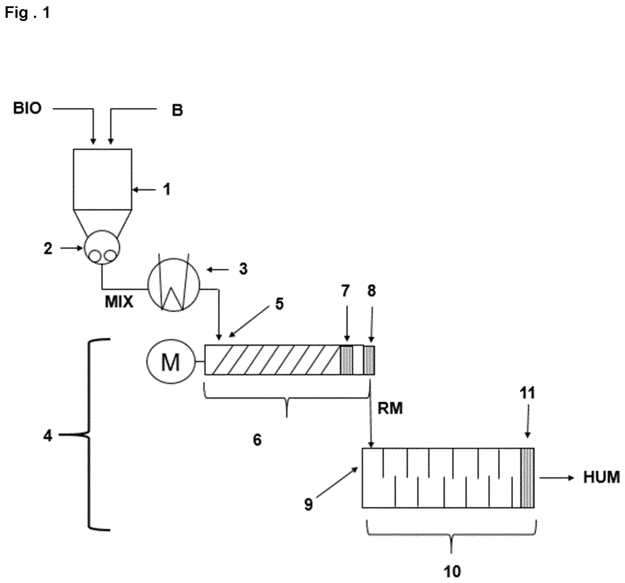

A basic and exemplary embodiment of the continuous process defined above is shown in Fig. 1. In step 1) biomass BIO and base B are fed into a mixing unit 1. Generally, the mixing unit may be any device typically used to mix solid and or liquid components, preferably while simultaneously having short retention times.

In a preferred embodiment of the invention the mixing unit 1 is a mixing vessel designed in the shape of a cyclone to further aid mixing of the components and further conveying the resulting mixture MIX. In another preferred embodiment of the invention the mixing unit 1 has a conical or at least torispherical shaped bottom, to allow the vessel being emptied completely or substantially complete. In another embodiment the inner surface of the mixing unit 1 can be heated.

Mixing might further be effected by active mixing means such as rotating blades, shafts or passive means like stators being part of the mixing unit 1.

After mixing the mixture MIX is removed from the mixing unit 1 by means of a pump 2.

The pump 2 is preferably directly connected to the outlet of the mixing unit 1. In general, the connection piece between pump and mixing unit is preferably as short as possible.

Due to the high viscosity of the mixture MIX at this stage, the inlet of the pump is preferably designed with a large inlet, thereby reducing the pressure drop at the inlet.

The pump 2 may be selected from the group consisting of positive displacement type pumps, gear pumps, piston pumps, membrane pumps, screw type pumps, extruder type pumps like counter-rotating or co-rotating single or twin screw extruders or kneader type pumps. Positive displacement type pumps and gear pumps are preferred, gear pumps are even more preferred.

In another preferred embodiment the pump 2 comprises a combination of an extruder or a kneader and a gear pump whereby the gear pump is fed from the extruder or kneader.

The mixture MIX obtained in step 1) performed in the mixing unit 1 is then passed through an optional heater 3 to obtain a heated mixture MIX.

A heater may be any device that is able to raise the temperature of mixture MIX. In a preferred embodiment, heater 3 is a heat exchanger. The heating medium is selected from the group consisting of steam, heating oil, salt melts or hot pressurized water. In another embodiment heating is effected electrically. The heat exchanger is for example of shell-and-tube type, where the mixture MIX is inside the tubes and the heating medium is on the shell side. Special inserts in the tubes may be applied to enhance heat transfer. Another type of heat exchanger may also be used, in which mixture MIX is on the outside of the heat exchanger tubes. The advantage of the aforementioned types of heat exchangers is the avoidance of maldistribution and easy maintenance as well as good heat transfer. Said heat exchangers are well known and commercially available. In a less preferred embodiment plate type heat exchangers may also be applied.

The heated mixture MIX is then conveyed to and fed into a first reaction section 6 of a processing unit 4 at the feeding point 5. It is noted and well known to those skilled in the art that the heater is optional if the first reaction section of the processing unit 4 is designed to apply or introduce sufficient energy to mixture MIX to achieve the process temperatures as defined above for step 2). However, it is typically preferred to utilize a heater 3 in order to facilitate the heating before entering the processing unit.

In one embodiment mixture MIX is heated to 60 to 100 °C in heater 3 before entering the first reaction section 6 of the processing unit 4.

In another embodiment without a heater 3 the mixture MIX is directly conveyed from the mixing unit 1 into the first reaction section 6 of the processing unit 4 at the feeding point 5.

Suitable first reaction sections 6 of the processing unit 4 include kneaders, single screw and multiscrew extruders each of the aforementioned comprising any number of barrels and types of screw elements and other single or multishaft conveying kneaders. Possible embodiments of multiscrew extruders are twin-screw extruders, ring extruders or planetary roller extruders.

They are typically propelled by a motor M as shown in Figure 1.

Single screw extruders include those having an axial oscillating screw. Twin screw extruders are for example counter-rotating intermeshing, counter-rotating non-intermeshing, co-rotating intermeshing and co-rotating non-intermeshing twin screw extruders, whereby co-rotating intermeshing twin screw extruders are preferred.

In one embodiment of the invention the extruders can either be heated via the barrels to temperatures up to 300°C or cooled.

The first reaction sections 6 of the kneader or extruder simultaneously serves as conveying section. In the first reaction section 6 step 2) of the process according to the invention is performed.

Preferred kneader or extruder materials should be non-corrosive and should substantially prevent the reaction mixture MIX, the reaction mixture RM and if kneaders or extruders are also used as a second reaction section product HUM from being contaminated with metal or metal ions.

Preferred extruder materials include nitrided steel, duplex steel, stainless steel, nickel-based alloys, composite materials like sintered metals, hot isostatic pressed materials, hard wear resistant materials like Stellite, coated metals with coatings for example made from ceramics, titanium nitride, chromium nitride and diamond like carbon (DLC).

The first reaction section 6 is terminated by an accumulating section 7. The purpose of the accumulation is to assure a certain pressure level and, where desired, to introduce mechanical energy into the material to facilitate transfer of the reaction mixture RM at the transfer section 8. The accumulating section 7 may comprise any means that enable the accumulation of the reaction mixture RM. It may be designed to include for example kneading or throttling elements, blister discs or die plates.

The application of kneading elements, blister discs or die plates within the accumulating section is preferred, kneading elements are even more preferred. Examples of kneading elements include kneading blocks, which may be designed as double or triple flighted forward, backward or neutral conveying kneading blocks; single or double flighted screw mixing elements with grooves, single flighted tooth mixing elements, blister plates and single, double or triple flighted eccentric discs. The kneading elements may be assembled in any combination on the screw shafts of the extruder, in particular of a twin screw counter rotating or co-rotating twin screw extruder.

The accumulating section 7 is typically designed to form a product plug at the outlet of the first reaction section 6, thereby preventing surrounding air from entering the first reaction unit 4. While passing from the feeding point 5 to the first reaction section 6 and the accumulating section 7 to the transfer section 8 the mixture MIX undergoes a transition to the reaction mixture RM.

At the transfer section the reaction mixture RM is transferred in to the second reaction section 10 at the feeding point 9.

Suitable second reaction sections 10 of the processing unit 4 include kneaders, single screw and multiscrew extruders such as those defined above for the first reaction section or may comprise or be a static mixer as shown in figure 1 comprising a plurality of stators. Such stators can be designed in any shape and configuration known to those skilled in the art.

In the second reaction section step 3) is performed.

While passing from the feeding point 9 of the second reaction section 10 and the outlet section 11 the reaction mixture RM undergoes a transition to the product HUM which typically has a sludgy appearance.

Due to the typically longer reaction times compared to step 2) they are preferably designed with dimensions to account for that. This includes designs with larger diameters and/or higher free volume within the stator compared to the diameters and/or higher free volumes of the kneaders or extruders that may be employed as a first reaction section.

The outlet section 11 typically comprises means to allow the product HUM to exit the processing unit 4 and optionally processing equipment for product HUM. Examples of suitable product processing equipment includes combinations of die plates and cutters; die plates and turbulators.

In one embodiment of the invention the product processing equipment is combined with cooling means.

The cooling means comprises any means that allow the removal of heat from the product HUM. Examples of cooling means include pneumatic conveyers with convective air cooling, vibrating conveyers with convective air cooling or with cooled contact surfaces, belt conveyers with convective air cooling, belt conveyer with cooled belts, water spraying upon outlet of the processing unit 4.

The product HUM may then be processed further for final packing and shipping. Product HUM may be packed into bags, tanks or containers for shipment.

Where solid products are desired the liquid phase of product HUM may be removed by suitable processes known to remove liquids from solids which includes filtration, for example supported by a hydraulic press, sedimentation and centrifugation to obtain a modified product.

Generally, the artificial humic substances obtained in the process of the present invention typically, without limitation, exhibit at least one, preferably at least two, more preferably at least three, for example three, four or five or even more preferably all of the following properties I) to V) in any combination, preferably in the order of sequence of properties I) to V):
I) an elemental composition with
   a) a carbon content of 45 to 65-wt.%, preferably of 50 to 60 wt.%,
   b) an oxygen content of 20 to 40 wt.%, preferably of 27 to 32 wt.%.
   c) a nitrogen content of 0 to 5 wt.%, preferably of 0.5 to 4 wt.%.
   whereby carbon, oxygen and nitrogen typically add up to 75 to 95 % of the artificial humic substances with regard to their dry mass.

The remainder is typically hydrogen, sulfur and other elements such as potassium, calcium resulting for example from the biomass and base employed in step 1.

The artificial humic substances obtained in the process of the present invention further exhibits for example
II) an acid number of 400 to 870 mmol/100 g.

In one embodiment the base-water-soluble fraction of the artificial humic substances has
III) a weight average molecular weight M_{w} of 5,000 to 20,000 g/Mol.

In another embodiment the base-water-soluble fraction of the artificial humic substances material has
IV) a number average molecular weight M_{n.} of 400 to 8,000 g/Mol.

In another embodiment the base-water-soluble fraction artificial humic substances material exhibits
V) a PDI of 4 to 12, preferably of 5 to 9, whereby PDI is defined as being the ratio between M_{w} and Mₙ. base-water-soluble fraction artificial humic substances
M_{w} and Mₙ are determined by the GPC analysis as further outlined in the experimental part.

For the purposes of determination of the properties II) to V) the base-water-soluble fraction of the artificial humic substances according to the invention is obtained from the artificial humic substances obtained after step 3) by separation of the liquid phase from the solids at a temperature of 15° to 25° by filtration as further outlined in the experimental part. The separated liquid phase then contains the base-water-soluble fraction of the artificial humic substances.

The artificial humic substances obtainable by the process of the present invention and as specified above are of high quality and are also encompassed by the invention.

They may be used as soil fertilizer or soil amendment, but also for improving biologically driven processes such as biogas generation, sewage sludge fermentation, acidolysis, biomass fermentation, animal food additive, in cosmetics or veterinary or pharmaceutical products.

The particular advantage of the inventive process is that the conversion of biomass into artificial humic substances occurs within a short reaction time at moderate temperatures preferably in a continuous fashion thus lowering the energy demand and making the technology more attractive under commercial and environmental aspects.

The following examples shall describe the invention in more detail without limiting it thereto.

### Experimental

### Analytics

Fourier-transform infrared spectroscopy (FTIR) was performed on the Nicolet Summit X FTIR spectrometer using OMNIC Paradigm Software from Thermo Fisher Scientific to process the measurements and plot the results. The spectra were measured in the 4000-600 cm⁻¹ wavenumber range with a 4 cm⁻¹ resolution by collecting and averaging on 32 scans. Because of the hydrophilic nature of the sample, the spectra of water was subtracted from the spectra of the sample to avoid the interference of the signals.

UV-Vis spectra were recorded using a P6 UV/VIS single-beam spectrophotometer from VWR in the 200 to 700 nm range with a resolution of 1 nm. To measure the spectra, a 20 mg/L solution of the sample in a 0.1 M phosphate buffer (pH 7.4) was prepared, followed by filtration through a 0.45 µm syringe filter to obtain the base-water soluble fraction of the artificial humic substances. To evaluate the humification degree of the artificial humic substances the following the base-water soluble fraction of the artificial humic substances spectroscopic indices were calculated: E_{ET}/E_{Bz} ratio - the ratio of absorptivity at 220 nm and 253 nm, and E₄/E₆ ratio - the ratio of absorptivity at 465 nm and 665 nm. The calculated values of the corresponding indices for prepared artificial humic acids indicate high degree of condensation (E₄/E₆ ratio is 3.2) and substitution (E_{ET}/E_{Bz} is 0.65).

Gel penetration chromatography (GPC) was applied to the base-water soluble fraction of the samples. Insoluble humin fraction might have larger molecular weight, but is not suitable for the measurement with GPC method. GPC measurements were performed in a 0.067 M Na₂HPO₄ buffer on a gel permeation chromatography system from PSS equipped with PSS SECcurity2 pump and PSS SECcurity2 injector. The separation was performed on a PSS-MCX analytical column with the particle size of 5 µm equipped with a guard column PSS-MCX-VS and the MCX-2 guard column.

The sample was dissolved in the buffer to reach a concentration of 2g/l of the analyte. The detection was done under continuous flow of the eluent of 1 ml/min at 25°C with the injection volume of analyte solution of 100 µl. The signal detection was done by PSS SECcurity2 UV and PSS SECcurity2 RI detectors.

The molecular weight of the analytes was evaluated against the sodium salt of polystyrene sulfonate.

PDI was calculated as a ratio of M_{w}/Mₙ.

Dry matter content was determined using a MBG-64 moisture analyzer from VWR. A weighed small sample of the biomass (1 to 2 g) was dried at 105°C until the weight loss was less than 0.1% of the starting mass of the sample per 60 seconds. The mass of the dried biomass was then used to calculate the dry mass content in %.

### Example 1

720 g of milled (grain size up to 5 mm) and pre-composted biomass (3 month composting, Endomondo, a compost facility) with 92 % dry mass mixed with 99 g of KOH which equaled 15 wt.-% of the biomass calculated on dry mass. The composition was mixed thoroughly and 1.3836 L of water was added to obtain a biomass content of 30 wt.% calculated on dry mass. The mixture was fed into a first batch reactor as a first reaction section and heated at 220 C for 120 minutes.

Thereafter the reaction mixture was heated at a temperature of 140°C for 120 minutes after transfer into a second batch reactor as a second reaction section.

The initial pH of 13.5 changed to 9.0 after the reaction.

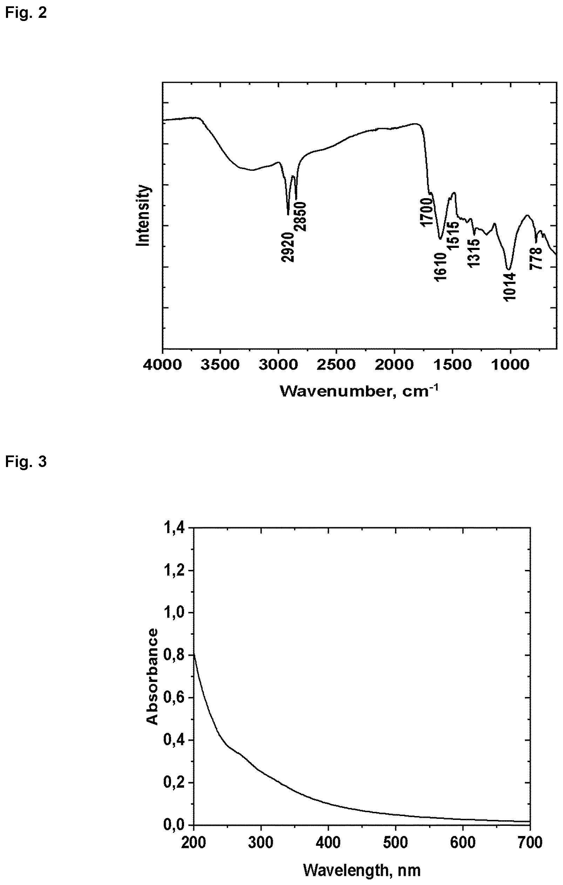

The products were characterized with UV and FTIR spectroscopy (see figures 1 and 2), molecular weight was defined using GPC (see figure 3).

### Example 2

400 g of milled (grain size up to 5 mm) and pre-composted biomass (3 month composting, Endomondo, a compost facility) with 92 % dry mass was mixed with 36.8 g of KOH which equals 10 wt.-% of the biomass calculated on dry mass. The composition was mixed thoroughly and 2.1 L of water were added to adjust the mixture to a biomass content of 15 wt.% calculated on dry mass. The mixture was fed into a first batch reactor as first reaction section and heated at a temperature of 220 °C for 120 minutes.

Thereafter the reaction mixture was heated at a temperature of 140°C for 120 minutes after transfer into a second batch reactor as second reaction section.

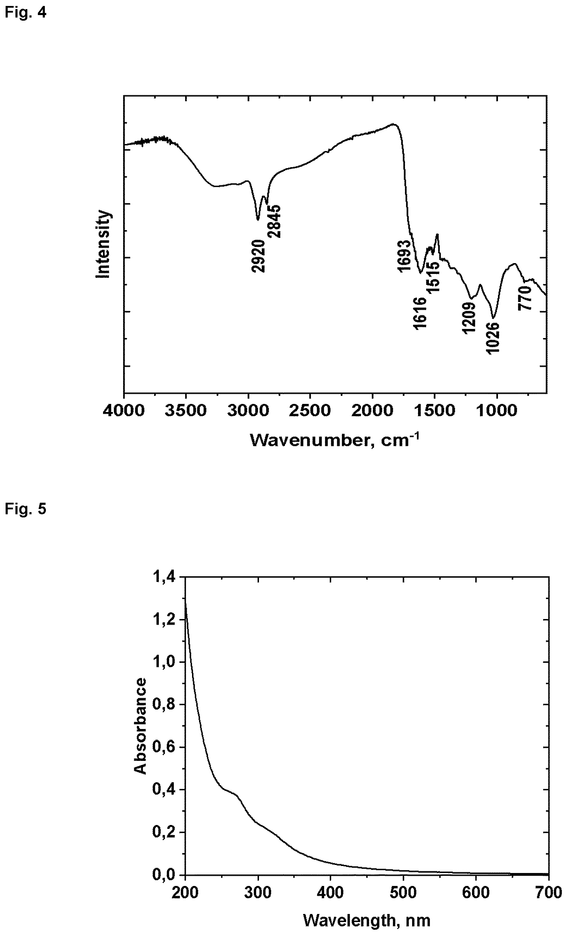

The initial pH of 12.9 changed to a final pH of 7.4 after the reaction. The products were characterized with UV and FTIR spectroscopy (see figures 4 and 5), molecular weight was defined using GPC (see figure 6).

The number-average weight (Mₙ), weight-average molecular weight (M_{w}), and polydispersity index (PDI) of humic substances obtained according to examples 1 and 2 are given in table 1.

**Table 1.: Characteristic properties of artificial humic substances obtained according to examples 1 and 2**

| **Sample** | **Mₙ [kDa]** | **M_{w} [kDa]** | **PDI** |
|---|---|---|---|
| Example 1 | 1.3 | 9.5 | 7.6 |
| Example 2 | 1.1 | 7.1 | 6.8 |

In the FTIR spectra of examples 1 and 2 (see Figures 2 and 5) the presence of all typical structural moieties also found in natural humic acids are also present for the artificial humic substances prepared according to the invention.

These are: aliphatic methyl and methylene groups, carbonyl groups of carboxylic acids as well as ketones, amino groups from amino acids, aromatic and polysaccharide species.

The assignment of peaks to important structural elements is given in table 2.:

**Table 2. Band positions and peaks and their assignments to structural elements**

| Band position [cm⁻¹] | Assignment |
|---|---|
| 2920 | Aliphatic methyl and methylene groups |
| 2850 | |
| 1700 | C=O stretching of carboxylic acids and ketones |
| 1610 | C=C stretching vibrations of aromatic rings |
| 1515 | stretching vibrations of -NH in amides |
| 1315 | C-O stretching of phenols |
| 1014 | C-O-C stretching of polysaccharides |
| 778 | out-of-plane bending vibrations of C-H bonds in substituted aromatic rings |

## Claims

1. A process for the conversion of biomass into humic substances the process comprising at least the steps of
1) Providing a mixture of
i) biomass and
ii) base and
2) heating said mixture at a temperature of 160 to 250°C, preferably 180 to 230 °C for 5 seconds to 300 minutes, preferably 10 seconds to 240 minutes and more preferably 20 seconds to 120 minutes to produce a reaction mixture
3) heating the resulting reaction mixture at a temperature of 80 to 159°C, preferably 100 to 140°C for at least 90 minutes, preferably 90 to 480 minutes, more preferably 120 to 240 minutes to obtain as product artificial humic substances.

2. The process according to claim 1, wherein at least one of steps 1), 2) and 3), preferably at least 2 of the steps, more preferably all of the steps are performed continuously.

3. The process according to claim 1 or 2, wherein the biomass contains plant biomass, preferably plant biomass which contains 70 wt.% or more, more preferably 80 wt.% or more and most preferably 90% or more of polysaccharides and lignines and polysaccharides covalently bound to lignines with respect to the dry mass of the biomass.

4. The process according to any one of claims 1 to 3, wherein the biomass is or contains agricultural plant material, preferably any one or mixtures of the following: feed crop residues, wood, straw, grass, leaves, chaff, bagasse, waste paper, oil press cakes, olive kernels including pits and pulp, fruit pomace, coffee grounds, rice husk, corn stover, wheat bran, coconut husk, palm kernel shells, soybean hulls, shea peels, cassava peels, peanut shells and grape seeds and skins.

5. The process according to any one of claims 1 to 4, wherein the base is selected from ammonia, oxides of calcium and magnesium, hydroxides of calcium, magnesium, sodium and potassium, carbonates of calcium, magnesium, sodium and potassium and any mixtures of the aforementioned bases, preferably selected from oxides of calcium and magnesium, hydroxides of calcium, magnesium, sodium and potassium, carbonates of calcium, magnesium, sodium and potassium and any mixtures of the aforementioned preferred bases, more preferably selected from potassium carbonate and/or potassium hydroxide and even more preferably is potassium hydroxide.

6. The process according to any one of claims 1 to 5, wherein the weight ratio of biomass and base both calculated on dry mass is from 1:1 to 50:1, preferably from 3:1 to 20:1 and more preferably from 4:1 to 10:1.

7. The process according to any one of claims 1 to 6, wherein the amount of base is selected such that the final pH value normalized to or measured at 25°C after step 3) is from 6 to 10, preferably from 7 to 9 and more preferably from 7.2 to 8.5.

8. The process according to any one of claims 1 to 7, wherein the content of biomass calculated on its dry mass is from 5 to 80 wt.%, preferably from 20 to 60 wt.% and more preferably from 25 to 60 wt.% of the total weight of the mixture employed in step 1).

9. The process according to any one of claims 1 to 8, wherein the process comprises a step before step 1) which is step
Pre-1) wherein the biomass is treated with acids or enzymes in order to at least partially hydrolyze macromolecules such as polyoses or polyoses covalently bound to lignin such as lignocelluloses or proteins.

10. The process according to any one of claims 1 to 9, wherein the artificial humic substances are prepared in a continuous process comprising at least the steps of:
1) feeding biomass and base and optionally additional water into at least one mixing unit (1) to obtain a mixture of biomass and base (M) as defined in preceding claims,
2) heating the mixture provided in step 1) in a first reaction section (6) of a processing unit (4) at the temperature as defined in preceding claims to obtain a reaction mixture
3) heating the reaction mixture of step 2) in a second reaction section (10) of a processing unit to the temperature and the period as defined for step 3) in preceding claims thereby obtaining the
artificial humic substances at the outlet section (11) of the processing unit (4).

11. The process according to claim 10, wherein the processing unit (4) comprises at least one, preferably one or two kneaders, single screw or multiscrew extruders each of the aforementioned comprising any number of barrels and types of screw elements, whereby twin-screw extruders, ring extruders or planetary roller extruders are preferred and twin-screw extruders, in particular co-rotating twin-screw extruders are more preferred.

12. The process according to claim 10 or 11, wherein the residence time in step 1) is from 5 seconds to 30 minutes, preferably from 10 seconds to 10 minutes and even more preferably from 20 seconds to 5 minutes.

13. The artificial humic substances obtainable according to a process of any one of claims 1 to 13.

14. Artificial humic substances and Artificial humic substances according to claim 13 exhibiting at least one, preferably at least two, more preferably at least three, for example three, four or five or even more preferably all of the following properties I) to V) in any combination, preferably in the order of sequence of properties I) to V):
I) an elemental composition with
a) a carbon content of 45 to 65-wt.%, preferably of 50 to 60 wt.%,
b) an oxygen content of 20 to 40 wt.%, preferably of 27 to 32 wt.%,
c) a nitrogen content of 0 to 5 wt.%, preferably of 0.5 to 4 wt.%,
whereby carbon, oxygen and nitrogen add up to 75 to 95 % of the artificial humic substances with regard to their dry mass,
and with respect to the base-water-soluble fraction of the artificial humic substances
II) an acid number of 400 to 870 mmol/100 g,
with regard to the base-water-soluble fraction of the artificial humic substances
III) a weight average molecular weight M_{w} of 5,000 to 20,000 g/Mol,
IV) a number average molecular weight Mₙ of 400 to 8,000 g/Mol and
V) a PDI of 4 to 12, preferably of 5 to 9,
whereby M_{w} and Mₙ and thus also the PDI are determined by GPC analysis.

15. Use of artificial humic substances according to claim 13 or 14 as soil fertilizer, soil amendment; for biogas generation, sewage sludge fermentation, acidolysis, biomass fermentation, as animal food additive, in cosmetics or veterinary or pharmaceutical products.
